# EUROPEAN PATENT APPLICATION

(11) **EP 4 548 755 A1**
(43) Date of publication of application: **07.05.2025**
(21) Application number: 24209450.6
(22) Date of filing: 29.10.2024
(51) Int. Cl.: A01K 1/03

(54) **MODULAR BASE FOR AN ANIMAL'S CAGE AND MODULAR BOTTOM FOR AN ANIMAL'S CAGE**

(30) Priority: 02.11.2023 IT 202300023106
(71) Applicant: Ferplast S.p.A., 36070 Castelgomberto (VI) (IT)
(72) Inventor: VACCARI, Nicola, 36070 CASTELGOMBERTO (VICENZA) (IT)
(74) Representative: Sandri, Sandro

(57) **Abstract**

A modular base (10) for an animal's cage comprises a first base module (11), a second base module (12) and constraining elements (13) configured to stably constrain the first base module (11) and the second base module (12). In particular, the constraining elements (13) extend mainly along a transverse direction, preferably perpendicular, to a main lying plane of the modular base (10) so as to generate a geometric interference to a mutual movement between the first base module (11) and the second base module (12) along a direction parallel to the lying plane.

## Description

### TECHNICAL FIELD

The present invention relates to a modular base for an animal's cage, a modular bottom for an animal's cage and an animal's cage.

In particular, the present invention finds wide application in the field of cages for containing and transporting pets, for example rabbits, cats, dogs, rodents or other animals.

### PRIOR ART

The use of cages as containment structures for pets is currently well known. Such cages are usually composed of a base, a roof and four vertical walls arranged orthogonally. Each of these components is made using various techniques, depending on the intended use. In general, the vertical walls, as well as the base and the roof, mainly consist of grids formed by a series of horizontal and vertical metal wires, arranged so as to create a net or a grid which prevents the animal from exiting.

The base commonly has the shape of a basin and, in some cases, can act as a container for litter. Specifically, the litter can consist of a sandy or granular material which, in addition to absorbing excrement, provides a comfortable and warm environment for the animal.

Disadvantageously, the traditional cages intended for rabbits and other pets have limited flexibility in terms of dimensions and formats.

Therefore, it is not possible to adapt the size of the cage to specific needs, for example the need to accommodate a larger number of animals or to cope with the increase in the size of the accommodated animal.

This problem is commonly managed by replacing the cage with a larger one. However, such a solution is not always feasible as, very often, domestic spaces do not have enough extra space to accommodate a larger cage. Furthermore, needs may change over time, for example due to the decrease in the number of animals following the death of one or more specimens, making the previously enlarged dimensions excessive.

### DESCRIPTION OF THE INVENTION

In this context, the technical task underlying the present invention is to propose a modular base for an animal's cage and a modular bottom for an animal's cage which overcome the aforementioned drawbacks of the prior art.

In particular, it is an object of the present invention to provide a modular base for an animal's cage and a modular bottom for an animal's cage having a high degree of operational flexibility and dimensional adaptability.

A further object of the present invention is to provide a modular base for an animal's cage and a modular bottom for an animal's cage having high dimensional stability and solidity of the bottom when assembled, particularly important during maintenance operations in which the bottom must be handled for cleaning.

A further object of the present invention is to provide a modular base for an animal's cage and a modular bottom for an animal's cage having reduced dimensions when disassembled and, preferably, packaged to facilitate the transport thereof.

A further object of the present invention to provide a modular base for an animal's cage and a modular bottom for an animal's cage which ensure a seal of the liquids present therein.

The stated technical task and specified objects are substantially achieved by a modular base for an animal's cage and a modular bottom for an animal's cage comprising the technical features disclosed in the independent claim.

The appended claims outline possible advantageous embodiments of the invention.

### ILLUSTRATION OF THE DRAWINGS

Additional features and advantages of the present invention will become more apparent from an approximate, and thus non-limiting, description of a preferred, but non-exclusive embodiment of a modular base for an animal's cage and a modular bottom for an animal's cage, as illustrated in the appended drawings, in which:
- Figure 1A is a perspective view of a modular base for an animal's cage in accordance with a possible embodiment of the present invention;
- Figure 1B is an enlarged sectional view of the modular base for an animal's cage of Figure 1A;
- Figures 2A-2B are partial views of the modular base for an animal's cage of Figure 1A;

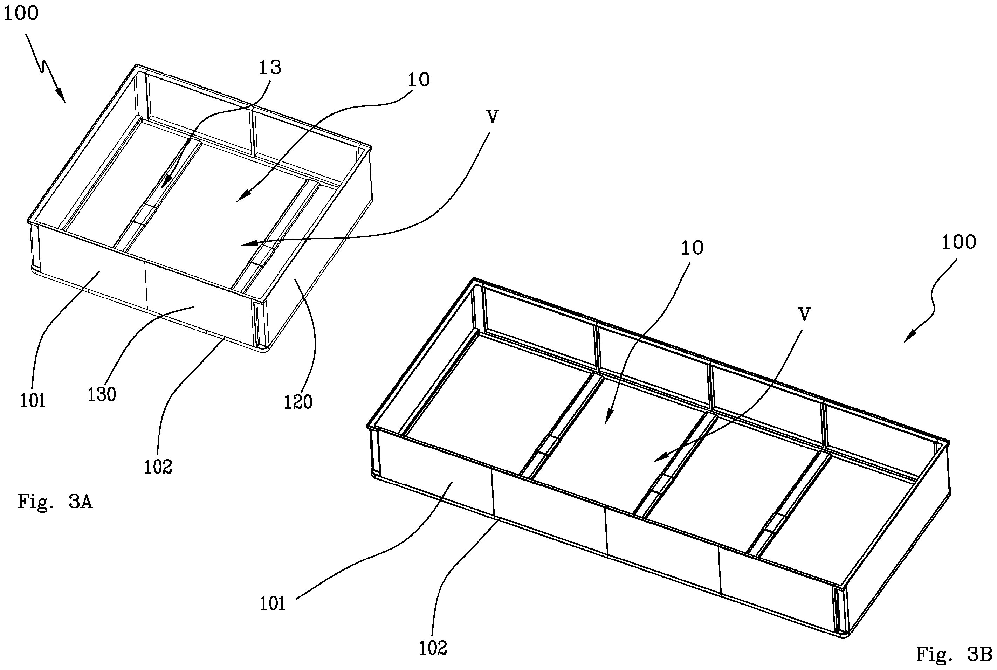

- Figures 3A-3B are perspective representations of a modular bottom for an animal's cage in accordance with respective possible embodiments of the present invention;

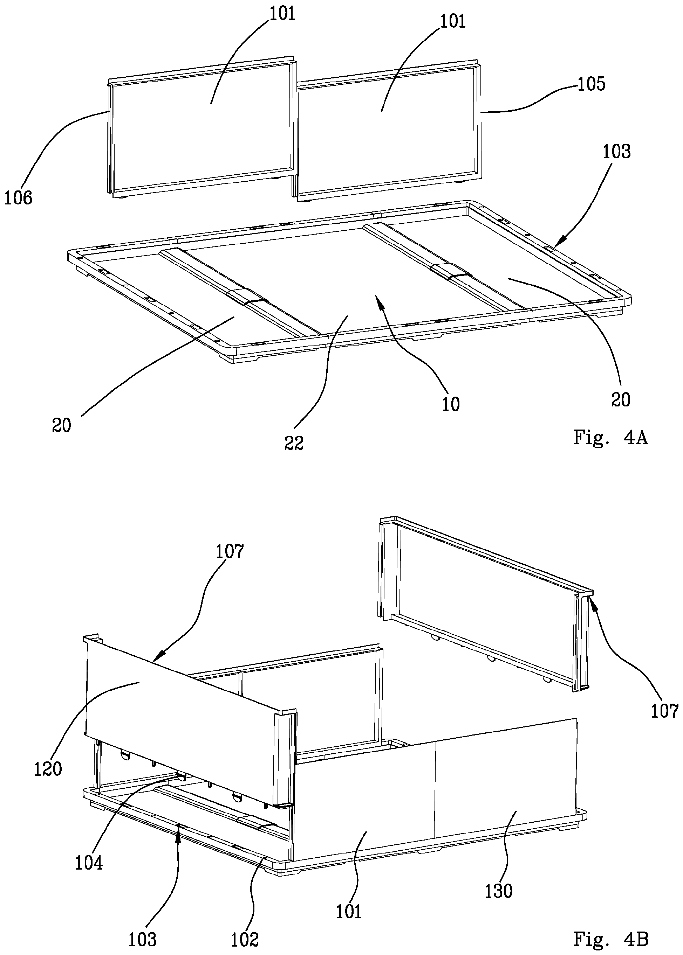

- Figures 4A-4B are perspective views of the modular bottom for an animal's cage of Figure 3A in accordance with respective operating conditions;

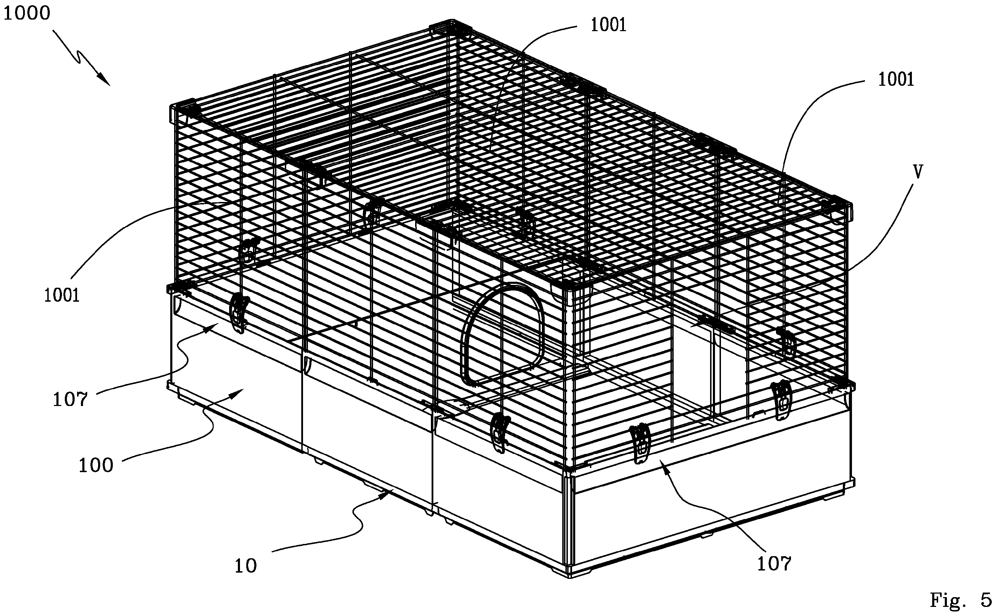

- Figure 5 is a perspective view of an animal's cage in accordance with a possible embodiment of the present invention.

### DESCRIPTION OF AN EMBODIMENT OF THE INVENTION

In accordance with the appended drawings, the reference number 10 has been used to generally designate a modular base for an animal's cage, which will be referred to hereinafter as modular base 10.

The modular base 10 comprises at least a first base module 11, defining at least a first portion of the modular base 10, and at least a second base module 12, defining at least a second portion of the modular base.

The base modules 11, 12 have a substantially plate-like shape so as to define a substantially flat support portion for an animal housed inside the cage.

The modular base 10 comprises constraining elements 13 configured to stably constrain the first base module 11 and the second base module 12. In particular, the constraining elements 13 extend mainly along a direction transverse, preferably perpendicular, to a lying plane of the modular base 10. Thereby, the constraining elements 13 generate a geometric interference to a mutual movement between the first base module 11 and the second base module 12 along a direction parallel to the lying plane.

That is, the constraining elements 13 are configured to mutually constrain the base modules 11, 12 to make a modular base 10 having a marked flexural-torsional stiffness and a resistance to tensile stresses parallel to the aforementioned lying plane. Thereby, the constraining elements 13 give the modular base 10 a high dimensional stability which facilitates the transport and cleaning thereof and the containment of the animal.

During a normal use configuration of the modular base 10, the lying plane is substantially horizontal and the constraining elements 13 extend along a vertical direction.

The constraining elements 13 are configured to make a shape coupling between the base modules 11, 12 allowing to make an easy and intuitive coupling between base modules 11, 12.

Furthermore, the constraining elements 13 can be configured to make a reversible coupling between the base modules 11, 12, ensuring a flexible customization of the modular base 10.

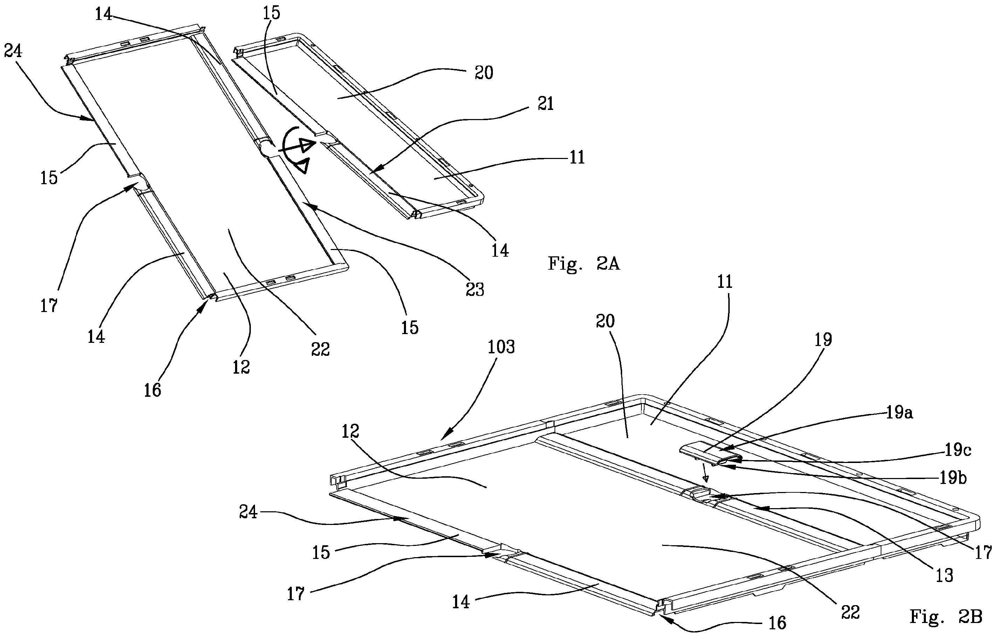

As illustrated in Figure 2A, the constraining elements 13 can be configured to make a bayonet-type coupling between the first base module 11 and the second base module 12 ensuring a particularly strong coupling between the base modules 11, 12. In particular, in the present discussion, "bayonet-type coupling" means a coupling in which two elements, for example the first base module 11 and the second base module 12, are connected by means of a mutual insertion and a subsequent mutual rotation.

That is, the constraining elements 13 are configured to stably constrain the first base module 11 and the second base module 12 by means of a partial mutual insertion of the first base module 11 and the second base module 12 and a subsequent relative rotation between the first base module 11 and the second base module 12. Such a coupling guarantees the modular base 10 has particular rigidity and robustness to flexural-torsional stresses.

Preferably, the constraining elements 13 are arranged on peripheral portions of the base modules 11, 12. Furthermore, the constraining elements 13 are preferably made in a single piece with the base modules 11, 12.

The constraining elements 13 comprise at least one hooking element 14, arranged on the first base module 11 and/or on the second base module 12, and at least one abutment element 15, arranged on the first base module 11 and/or on the second base module 12. In particular, the abutment element 15 is counter-shaped to the coupling element 14 and can be hooked by the hooking element 15 to make a shape coupling between the first base module 11 and the second base module 12.

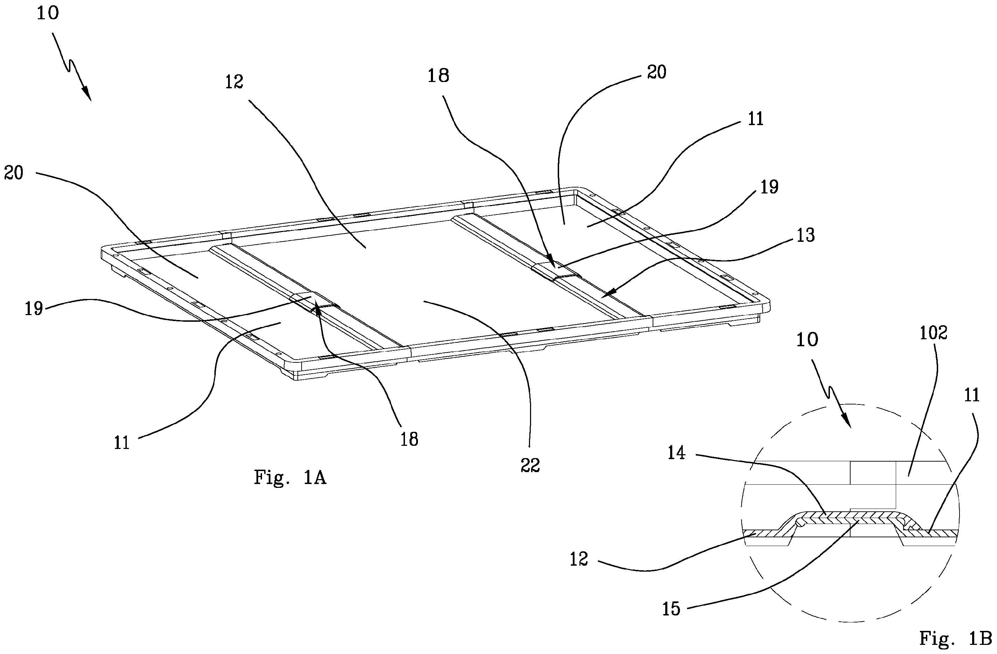

As illustrated in Figure 1B, the abutment element 15 is projecting from the first base module 11 and/or from the second base module 12 along a direction transverse, preferably perpendicular, to the aforementioned main lying plane of the modular base 10. The hooking element 14 defines a housing 16 adapted to insertingly receive the abutment element 15 to define a geometric interference to the mutual movement of the base modules 11, 12 along a direction substantially parallel to the aforementioned main lying plane of the modular base 10. Preferably, the housing 16 is configured to insertingly receive the abutment element 15 along a direction transverse to the aforementioned main lying plane.

The constraining elements 13 comprise a coupling opening 17, made on the first base module 11 and on the second base module 12, configured to allow a mutual insertion of adjacent base modules 11, 12. For example, the coupling opening 17 can be made on the first base module 11 and on the second base module 12, facilitating a mutual insertion of the base modules 11, 12 to determine an at least partial overlapping of the first base module 11 and the second base module 12. In particular, such an overlapping allows facilitating the insertion of the abutment element 15 in the housing 16 by means of a relative rotation between the first base module 11 and the second base module 12 along a rotation axis shared by the planes defined by the base modules 11, 12 and passing through the coupling opening 17. Thereby, the coupling opening 17 contributes to making a coupling provided with a marked rigidity and flexural-torsional strength between the base modules 11, 12. Such a coupling also ensures high resistance to forces parallel to the lying plane of the base modules 11, 12 which promote a mutual movement of the base modules 11, 12 in the lying plane. The aforementioned overlapping also guarantees continuity to the support portion for the animal and a seal to liquids which prevents a leakage of liquids from the modular base 10.

The modular base 10 further comprises a sealing element 19 insertable on the coupling opening 17 to prevent a leakage of fluid from the modular base 10. In particular, the sealing element 19 is engageable in the coupling opening 17.

As illustrated in the attached figures, at least one base module has a hooking element 15, configured to hook a respective abutment element 14 of a further base module, an abutment element 14, configured to be hooked by a respective hooking element 15 of the further base module, and a coupling opening 17, operatively connected to a respective coupling opening 17 of the further base module and/or to the further base module. In particular, the coupling opening 17 can be at least partially interposed between the hooking element 15 and the abutment element 14. Thereby, the constraining elements 13 are configured to constrain the base modules 11, 12 by means of a mutual rotation along an axis parallel to said lying plane and passing through the coupling opening 17.

In accordance with a possible embodiment and as illustrated in the appended drawings, the base modules 11, 12 can comprise at least one end module 20 having a constraining edge 21 on which the constraining elements 13 are at least partially arranged. Furthermore, the base modules 11, 12 can comprise at least one internal module 22 having a first constraining edge 23 and at least a second constraining edge 24 on which the constraining elements 13 are at least partially arranged. Thereby, a modular base 10 is made comprising a customizable succession of internal modules 22 interposed with a pair of end modules 20. Furthermore, a modular base 10 is made comprising a pair of end modules 20 connected to each other.

For example, the base modules 11, 12 have a quadrangular shape in which at least one side defines the constraining edge 21 or the first constraining edge 23 or the second constraining edge 24. In particular, the remaining sides can define, for example, a peripheral edge 102 of the modular base 10. Furthermore, the first constraining edge 23 and the second constraining edge 24 of the internal module 22 can be mutually facing. Purely by way of non-limiting example, the constraining elements 13 are arranged on the first constraining edge 23 and on the second constraining edge 24 symmetrically with respect to the center of symmetry of the internal module 22.

Advantageously, the at least a first base module 11 and/or the at least a second base module 12 and/or the constraining means 13 and/or the sealing means 18 can be made of a polymeric material, preferably plastic, giving a marked lightness and, therefore, ease of movement to the modular base 10.

In accordance with a further aspect, the present invention relates to a modular bottom 100 for an animal's cage comprising a modular base 10 in accordance with what has been described above and a plurality of vertical walls 101 reversibly engageable or engaged to a peripheral edge 102 of the modular base 10 to define a containment volume "V" adapted to at least partially house an animal.

Preferably, the peripheral edge 102 is projecting vertically from the base modules 11, 12 so as to allow an engagement of the vertical walls 101 and, at the same time, limit the vertical encumbrance of the modular base 10. For example, the peripheral edge 102 can extend vertically for a length equal to or less than 5 centimeters.

Purely by way of non-limiting example, the modular base 10 can have a plurality of engagement openings 103 and the vertical walls 101 can comprise a plurality of engagement elements 104. In particular, the engagement elements 104 can be configured to engage in the engagement openings 103 to connect the vertical walls 101 to the modular base 10.

As illustrated in the appended drawings, the end modules 20 can have three sides at least partially defining the peripheral edge 102 of the modular base 10, and one side defining the constraining edge 21. Furthermore, the internal modules 22 can have two sides, at least partially defining the peripheral edge 102 of the modular base 10, and two sides, respectively defining the first constraining edge 23 and the second constraining edge 24.

According to a further advantageous aspect, each vertical wall 101 can have a first vertical edge 105 and a second vertical edge 106 which are counter-shaped and mutually engageable to make a modular wall defined by a plurality of vertical walls 101 connected succession.

Advantageously, the plurality of vertical walls 101 can comprise at least one end wall 120 configured to engage on an end module 20. In particular, the end wall has a "C" shape consisting of a main wall and a pair of connecting walls, perpendicular to the main wall. Furthermore, the plurality of vertical walls 101 can comprise at least one internal wall 130, engageable on the end modules 20 and/or on the internal modules 22. In particular, the internal wall 130 is also connectable by means of engagement to the connecting walls of the end wall 120 and/or to a further internal wall 130.

According to a further advantageous aspect, vertical walls 101 can have a connecting portion 107, opposite the engagement elements 104, configured to make a stable connection with a lid, preferably with at least one grate defining the lid, for an animal's cage.

In accordance with a further aspect, the present invention relates to a modular animal's cage 1000 comprising a modular bottom 100 for an animal's cage in accordance with what has been described above and a lid connectable to the modular bottom to define and delimit together with the modular bottom 100 the aforementioned containment volume "V".

In particular, the lid can comprise a plurality of grates 1001 mutually connectable to define a modular lid of the modular cage.

## Claims

1. A modular base (10) for an animal's cage, comprising:
- a first base module (11) defining a first portion of the modular base (10);
- a second base module (12) defining a second portion of the modular base (10);
**characterized in that** it comprises:
- a coupling opening (17), made on the first base module (11) and on the second base module (12), configured to allow a mutual insertion of adjacent base modules (11, 12);
- constraining elements (13) configured to stably constrain the first base module (11) and the second base module (12) once coupled by means of the coupling opening (17);
**in that** the constraining elements (13) comprise at least one hooking element (14), arranged on the first base module (11) and/or on the second base module (12), and at least one abutment element (15), arranged on the first base module (11) and/or on the second base module (12); **in that** the abutment element (15) is counter-shaped to the hooking element (14) and can be hooked by the hooking element (14) to constrain the first base module (11) and the second base module (12).
**in that** it further comprises a sealing element (17) insertable on the coupling opening (17) to prevent a leakage of fluid from the coupling opening (17); and **in that** the first base module (11) and the second base module (12) have a substantially plate-like shape so as to define a substantially flat support portion for an animal housed inside the cage;

2. The base according to claim 1, wherein the first base module (11) and/or the second base module (12) have:
- a hooking element (14) configured to hook a respective abutment element (15) of a further base module;
- an abutment element (15) configured to be hooked by a respective hooking element (14) of a further base module;
- a coupling opening (17) operatively connected to a respective coupling opening (17) of the further base module and/or to the further base module, the coupling opening (17) being interposed between said hooking element (14) and said abutment element (15).

3. The base according to one or more of the preceding claims, wherein the constraining elements (13) are configured to make a bayonet-type coupling between the first base module (11) and the second base module (12).

4. The base according to one or more of the preceding claims, wherein the constraining elements (13) are arranged on peripheral portions of said base modules (11, 12); and wherein the base modules (11, 12) comprise:
- an end module (20) having a constraining edge (21) on which the constraining elements (13) are arranged; and
- an internal module (22) having a first constraining edge (23) and a second constraining edge (24) on which said constraining elements (13) are arranged.

5. The base according to claim 4, wherein the base modules (11, 12) have a quadrangular shape; and wherein the first constraining edge (23) and the second constraining edge (24) of said internal module (22) are mutually facing.

6. A modular bottom (100) for an animal's cage comprising:
- a modular base (10) according to one or more of the preceding claims;
- a plurality of vertical walls (101) reversibly engageable or engaged to a peripheral edge (102) of said modular base (10) to define a containment volume (V) adapted to house an animal.

7. The bottom according to claim 6, wherein each vertical wall has a first vertical edge (105) and a second vertical edge (106) which are counter-shaped and mutually engageable to make a modular wall defined by a plurality of vertical walls (101) connected in succession.
